# EUROPEAN PATENT SPECIFICATION

(11) **EP 2 448 832 B1**
(45) Date of publication and mention of the grant of the patent: **04.09.2013**
(21) Application number: 09786046.4
(22) Date of filing: 01.07.2009
(51) Int. Cl.: B65D 5/42, B65D 85/10

(54) **TACTILE PACKAGING FOR SMOKING ARTICLES**
VERPACKUNG FÜR RAUCHWAREN MIT TASTBARER OBERFLÄCHENTEXTUR
EMBALLAGE TACTILE POUR ARTICLES A FUMER

(43) Date of publication of application: 09.05.2012
(73) Proprietor: Philip Morris Products S.A., 2000 Neuchâtel (CH)
(72) Inventor: WEISS, Jacques, CH-1302 Vufflens-la-Ville (CH); MERMOD, Jacques, CH-1066 Epalinges (CH); SUCHET, Virginy, CH-1800 Vevey (CH)
(74) Representative: Millburn, Julie Elizabeth
(86) International application number: PCT/IB2009/006319
(87) International publication number: WO 2011/001200

(56) References cited:
- GB-A- 2 311 762
- US-A1- 2003 152 724
- US-B1- 6 364 106

## Description

The present invention relates to a container of smoking articles having a discontinuous tactile coating.

Smoking articles and other consumer goods are commonly packaged in containers formed from one or more folded laminar blanks of paper, board or other sheet material. Prior to being folded around a wrapped bundle of smoking articles in order to form the container, the outer surfaces of the one or more laminar blanks that form the exterior of the container are typically printed, embossed, debossed or otherwise embellished with graphics and text, such as manufacturer or brand logos, trade marks, slogans and other manufacturer, product and promotional information.

It is known to coat the printed surfaces of packaging for consumer goods with ultraviolet varnishes. In one known embodiment, an ultraviolet varnish is applied all over the printed surface as a continuous coating (all-over or flood varnish). In another known embodiment, an ultraviolet varnish is applied to selected areas or spots of the printed surface (spot varnish). Typically, transparent colourless high gloss ultraviolet varnishes are used to coat the printed surfaces of packaging for consumer goods in order to produce shiny reflective coatings.

US 2003/152724 A1 discloses disposable paperboard containers with textured coatings that are produced by applying a heat-hardenable liquid polymeric binder texturizing and/or insulating agent coating mixture to one surface of a flat paperboard blank in a pattern of covered and open areas and then subjecting the coating mixture to heat to cure the polymeric binder and expand the texturizing and/or insulating agent.

It would be desirable to provide packaging for consumer goods having a texture on the outer surface that affords a tactile sensation to a consumer when they handle the packaging.

The packaging of many consumer goods is discarded by consumers shortly after purchase. In contrast, consumers typically do not discard containers of cigarettes and other smoking articles until their contents have been consumed. Therefore, it would be particularly desirable to provide a container of smoking articles having a durable texture on the outer surface that affords a tactile sensation to a consumer each time they handle the container.

According to the present invention there is provided a container of smoking articles having a discontinuous tactile coating. The discontinuous tactile coating is formed by applying one or more tinted varnishes to the outer surface of the container in a pattern comprising a plurality of raised features having a height of at least about 10 microns and a separation of at least about 20 microns.

Throughout the specification, the term 'varnish' is used to denote a liquid coating that solidifies upon curing.

Throughout the specification, the term 'height' is used to denote the extent of the plurality of raised features in a direction perpendicular to the outer surface of the container.

Preferably, the plurality of raised features have a height of between about 10 microns and about 500 microns, more preferably of between about 10 microns and about 100 microns.

The discontinuous tactile coating may be formed by applying one or more tinted varnishes to the outer surface of the container in a pattern comprising a plurality of raised features of the same or different heights. Preferably, the plurality of raised features are of substantially the same height.

Throughout the specification, the term 'separation' is used to denote the distance between the peaks of adjacent raised features within the pattern.

Preferably, the plurality of features have a separation of between about 20 microns and about 10 cm, more preferably of between about 20 microns and about 1 cm, most preferably of between about 20 microns and about 0.1 cm.

The plurality of raised features formed by application of one or more tinted varnishes to the outer surface of containers of smoking articles according to the invention advantageously provide the containers with a novel, durable, non-abrasive, texture that affords a tactile sensation to consumers when handling the containers during use.

Preferably, the discontinuous tactle coating has a coefficient of static friction of between about 0.2 and about 1.0, more preferably of between about 0.25 and about 0.75, most preferably of between about 0.3 and about 0.5.

The discontinuous tactile coating may be formed by applying the one or more tinted varnishes to the outer surface of the container in any pattern comprising a plurality of raised features.

In one embodiment, the discontinuous tactile coating is formed by applying the one or more tinted varnishes to the outer surface of the container in a regular pattern. Throughout the specification, the term 'regular pattern is used to denote a pattern comprising a regular array of raised features. For example, the one or more tinted varnishes may be applied to the outer surface of the container in a regular striped pattern, a regular checked or square pattern, a regular brick pattern, a regular dotted or spotted pattern, a regular honeycomb or hexagonal pattern or any other regular alphanumeric, pictographic or geometric pattern.

In another embodiment, the discontinuous tactile coating is formed by applying the one or more tinted varnishes to the outer surface of the container in an irregular pattern. Throughout the specification, the term 'irregular pattern' is used to denote a pattern comprising a non-repetitive or random array of raised features. For example, the one or more tinted varnishes may be applied to the outer surface of the container in an irregular ripple or wave pattern, an irregular swirl pattern, an irregular spiral pattern, an irregular whorl pattern, an irregular wood grain pattern, an irregular tyre tread pattern or irregular animal skin patterns (for example, cow, zebra, tiger, leopard, snake, alligator or crocodile skin patterns).

Preferably, the pattern comprises a plurality of discrete raised features.

By applying one or more tinted varnishes to substantially the entire outer surface of the container in a pattern comprising a plurality of raised features, containers of smoking articles according to the invention may be provided with a discontinuous tactile coating on substantially the entire exterior of the container. Alternatively, by applying one or more tinted varnishes to only a portion of the outer surface of the container in a pattern comprising a plurality of raised features, containers of smoking articles according to the invention may be provided with a discontinuous tactile coating on only a portion of the exterior of the container.

The pattern may include a concentration gradient or distribution of the one or more tinted varnishes per unit area of the outer surface of the container. For example, a concentration gradient of the one or more tinted varnishes within the pattern can vary between a first portion having a low concentration and a second portion having a high concentration.

A concentration gradient may be achieved by varying the surface area of the pattern (for example, by increasing the size of geometric features or the font size of alphanumeric features of the pattern). Alternatively or in addition, a concentration gradient may be achieved by varying the height of the raised features in the pattern.

The discontinuous tactile coating is preferably provided on a portion of the outer surface of the container that is printed with a design comprising graphics, text or a combination of the two. For example, the discontinuous tactile coating may be formed by applying one or more tinted varnishes to a portion of the outer surface of the container that is printed with manufacturer or brand logos, trade marks, slogans or other advertising, promotional or product information. Alternatively or in addition, the discontinuous tactile coating may be provided on an unprinted or plain portion of the outer surface of the container.

Where the discontinuous tactile coating is provided on a portion of the outer surface of the container that is printed with a design, the discontinuous tactile coating may be formed by applying the one or more tinted varnishes to the outer surface of the container in a pattern corresponding to one or more features of the printed design. This advantageously has the effect of highlighting the features of the printed design corresponding to the pattern. For example, the discontinuous tactile coating may be formed by applying the one or more tinted varnishes to the outer surface of the container in a pattern corresponding to a manufacturer or brand logo printed on the outer surface.

The discontinuous tactile coating is formed by applying one or more tinted varnishes to the outer surface of the container.

As well as providing a novel texture that affords a tactile sensation, the application of one or more tinted varnishes to the outer surface of containers of smoking articles according to the invention advantageously provides the exterior of the container with a novel appearance.

Throughout the specification, the term 'tinted varnish' is used to denote a varnish comprising at least one tinting agent selected from the group consisting of pigments, dyes and matt agents. The at least one tinting agent may affect one or both of the colour and opacity of the tinted varnish.

The discontinuous tactile coating may be formed by applying two or more tinted varnishes of the same or different colour to the outer surface of the container.

Alternatively or in addition, the discontinuous tactile coating may be formed by applying two or more tinted varnishes of the same or different opacity to the outer surface of the container.

Where the discontinuous tactile coating is provided on a portion of the outer surface of the container that is printed with a design, the discontinuous tactile coating may be formed by applying one or more tinted varnishes of the same or different colour to the design to the outer surface of the container.

Matt agents may be present in the one or more tinted varnishes in an amount of, for example, up to about 50% by weight of the tinted varnish.

Pigments and dyes, the pigments and dyes may be present in the one or more tinted varnishes in an amount of, for example, between about 1% and about 45% by weight of the tinted varnish, preferably of between about 10% and about 20% by weight of the tinted varnish.

The tinting range of the one or more tinted varnishes may be from about 0.5% to about 100%.

The one or more tinted varnishes may comprise any suitable pigments, dyes or matt agents or suitable combinations of pigments, dyes and matt agents. For example, the one or more tinted varnishes may comprise organic pigments.

The container may be formed from any suitable material or combinations of materials, provided that at least a portion of the outer surface thereof is formed from a material or combination of materials to which a tinted varnish may be applied. Suitable materials include, but are not limited to, paper, board (for example, paperboard, cardboard or carton board), laminated board (for example, film laminated board or, foil laminated board), plastic, metal and combinations thereof.

Preferably, the container is formed from board. More preferably, the container is formed from board having a weight of between about 50 grams per square metre and about 350 grams per square metre. Most preferably, the container is formed from board having a weight of between about 60 grams per square metre and about 250 grams per square metre.

Preferably, the container is formed from one or more folded laminar blanks, more preferably from one or more folded laminar board blanks.

The discontinuous coating may be formed by applying the one or more tinted varnishes to the outer surface of the container in any suitable manner. For example, the one or more tinted varnishes may be applied by gravure or rotogravure printing, flexographic printing, lithographic printing, offset printing or screen printing.

The one or more tinted varnishes may be applied to the outer surface after assembly of the container. Alternatively, the one or more tinted varnishes may be applied to one or more components or materials from which the container is formed at any point prior to or during assembly of the container. Preferably, the one or more tinted varnishes are applied to one or more laminar blanks from which the container is subsequently formed, more preferably to one or more pre-printed laminar board blanks from which the container is subsequently formed.

After the application of the one or more tinted varnishes thereto in a pattern comprising a plurality of raised features, the one or more laminar blanks may be folded to form the container. For example, the one or more laminar blanks may advantageously be folded around a wrapped bundle of smoking articles to form a container of smoking articles using known and available machinery and methods employed in the production of prior art packs and cartons of smoking articles.

Where the discontinuous coating is formed by applying two or more tinted varnishes to the outer surface of the container in a pattern comprising a plurality of raised features, the two or more tinted varnishes may be applied simultaneously or successively.

For example, the discontinuous tactile coating may be formed by applying two or more tinted varnishes to the outer surface of the container using a single roller or cylinder in successive applications, wherein a different one of the two or more tinted varnishes is applied in each step. Alternatively, the discontinuous tactile coating may be formed by applying two or more tinted varnishes to the outer surface of the container using multiple rollers or cylinders wherein each roller or cylinder applies a separate one of the two or more tinted varnishes.

Having been applied to the outer surface of the container in a pattern comprising a plurality of raised features, the one or more tinted varnishes may be cured in any suitable known manner to form the discontinuous tactile coating.

In a preferred embodiment, the one or more tinted varnishes are cured in an inert gas atmosphere. For example, the one or more tinted varnishes may be cured under a nitrogen or carbon dioxide atmosphere.

Alternatively or in addition, the one or more tinted varnishes may be cured in other known manners. For example, the one or more tinted varnishes may be cured by exposure to ultraviolet light.

Suitable varnishes for use in the present invention are known in the art and commercially available from, for example, Schmid Rhyner AG of Adliswil, Switzerland.

Containers of smoking articles according to the invention may be individual packs of smoking articles or cartons comprising a plurality of individual packs of smoking articles.

Where, containers of smoking articles according to the invention are individual packs of smoking articles they may have substantially the same construction as known packs of smoking articles including, but not limited to, hinge-lid packs, slide and shell packs, shoulder packs and booklet packs. Similarly, where containers of smoking articles according to the invention are cartons comprising a plurality of individual packets of smoking articles they may have substantially the same construction as known cartons of smoking articles.

Containers of smoking articles according to the invention may be 'hard' packs. For example, containers according to the invention may be rigid hinge-lid containers comprising a box portion and a lid portion connected to the box portion along a hinge line extending across the rear wall of the container. In such embodiments, the discontinuous tactile coating may be provided on the exterior of one or both of the box portion and the lid portion.

Alternatively, containers of smoking articles according to the invention may be rigid slide and shell containers having an outer shell and an inner slide or tray in which the smoking articles are housed and which is slidable within the outer shell. In such embodiments, the discontinuous tactile coating may be provided on the exterior of the outer shell or on the exterior of the outer shell and inner slide of the rigid slide and shell container.

In yet further embodiments, containers of smoking articles according to the invention may be 'soft' packs comprising a cup-shaped box containing a wrapped bundle of smoking articles.

Containers of smoking articles according to the present invention may have one or more right-angled longitudinal edges, one or more right-angled transverse edges, one or more rounded longitudinal edges, one or more rounded transverse edges, one or more bevelled longitudinal edges, one or more bevelled transverse edges, or any suitable combination thereof. For example, by scoring in a known manner one or more laminar blanks from which the containers are produced, 'rounded-comer' and 'bevelled-corner' containers of smoking according to the invention may be produced.

Containers of smoking articles according to the invention may advantageously house smoking articles including, but not limited to, conventional lit-end cigarettes, cigars or cigarillos, heated smoking articles comprising a combustible fuel element or heat source and an aerosol-generating substrate (for example cigarettes of the type disclosed in US-A-4,714,082) and smoking articles for use with electrical smoking systems (for example cigarettes of the type disclosed in US-A-5,692,525).

It will be appreciated that through an appropriate choice of the dimensions of the container, containers of smoking articles according to the invention may house different total numbers of smoking articles or different arrangements of smoking articles. For example, containers according to the invention may house a total of between ten and thirty smoking articles.

The smoking articles may be arranged in different collations, depending on the total number of smoking articles. For example, the smoking articles may be arranged in a single row of six, seven, eight, nine or ten. Alternatively, the smoking articles may be arranged in two or more rows. The two or more rows may contain the same number of smoking articles. For example, the smoking articles may be arranged in: two rows of five, six, seven, eight, nine or ten; three rows of five or seven; or four rows of four, five or six. Alternatively, the two or more rows may include at least two rows containing different numbers of smoking articles to each other. For example, the smoking articles may be arranged in: a row of five and a row of six (5-6); a row of six and a row of seven (6-7); a row of seven and a row of eight (7-8); a middle row of five and two outer rows of six (6-5-6); a middle row of five and two outer rows of seven (7-5-7); a middle row of six and two outer rows of five (5-6-5); a middle row of six and two outer rows of seven (7-6-7); a middle row of seven and two outer rows of six (6-7-6); a middle row of nine and two outer rows of eight (8-9-8); or a middle row of six with one outer row of five and one outer row of seven (5-6-7).

Alternatively or in addition, containers of smoking articles according to the invention may house smoking articles of different dimensions (for example, smoking articles of different length or different circumference). For example, the container may house smoking articles with lengths of between about 40 mm and about 180 mm and diameters of between about 4 mm and about 9 mm.

Containers of smoking articles according to the invention may house filterless smoking articles and smoking articles with various filter tips. In addition, containers of smoking articles according to the invention may house smoking articles of the same type or brand, or of different types or brands (for example, smoking articles with different filters, tobacco blends, flavours, total particulate matter delivery, resistance to draw or nicotine delivery). Preferably, the dimensions of the container are adapted to the length of smoking articles, and the collation of the smoking articles housed therein. Typically, the external dimensions of the container are between about 0.5 mm and about 5 mm larger than the dimensions of the bundle or bundles of smoking articles housed therein.

Preferably, containers of smoking articles according to the invention house a plurality of smoking articles wrapped in an inner liner of, for example, metal foil or metallised paper.

Containers of smoking articles according to the invention may be overwrapped in a known manner with any suitable known material or combination of materials including, but not limited to, cellophane, polymeric films of, for example, polyethylene or polypropylene, metallised polymeric films and laminated polymeric films. Containers of smoking articles according to the invention may be overwrapped with overwrappers including one or more tear tapes. The one or more tear tapes may extend in a transverse or longitudinal direction around the perimeter of the container.

According to the invention there is further provided a method of making a container of smoking articles having a discontinuous tactile coating, the method comprising: applying one or more tinted varnishes to the outer surface of a laminar blank in a pattern comprising a plurality of raised features having a height of at least about 10 microns and a separation of at least about 20 microns; curing the one or more tinted varnishes; and folding the laminar blank around a bundle of smoking articles.

Preferably, the method comprises curing the one or more tinted varnishes in an inert gas atmosphere. For example, the method may comprise curing the one or more tinted varnishes in a nitrogen or carbon dioxide atmosphere.

The invention will be further described, by way of example only, with reference to the accompanying drawings in which:
Figure 1 shows a perspective view of a hinge-lid container of smoking articles according to an embodiment of the invention having a discontinuous tactile coating formed by applying a tinted varnish to the front wall of the hinged lid pack in a regular striped pattern; and
Figures 2 (a) to (f) show examples of regular and irregular patterns in which one or more tinted varnishes may be applied to the outer surface of containers of smoking articles according to the invention.

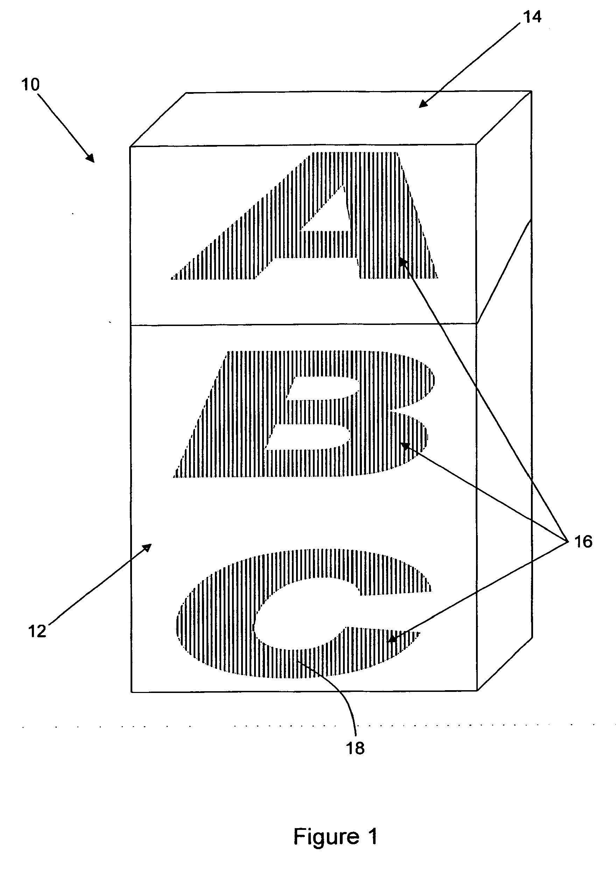

The hinge-lid container 10 of smoking articles shown in Figure 1 generally comprises a lower box portion 12 and an upper lid portion 14, which is hinged to the lower box portion 12 along a horizontal hinge line that extends across the rear of the hinge-lid container 10. The lower box portion 12 and the upper lid portion 14 have the same general construction as the box portion and the lid portion of a conventional hinge-lid cigarette pack having right-angled vertical edges and right-angled horizontal edges. The lower box portion 12 and upper lid portion 14 are formed from a single, folded, one-piece, laminar board blank.

In the following description of the hinge-lid container the terms "upper" and "top", "bottom" and "lower" and "front" and "rear", are used to describe the relative positions of components of the hinge-lid container when the container is held in an upright position by a consumer during opening so that the smoking articles in the container may be removed through the top side of the open container. These terms are used irrespective of the actual orientation of the hinge-lid container.

The lower box portion 12 has a front wall, a right side wall, a left side wall, a rear wall and a bottom wall. The upper lid portion 14 similarly has a front wall, a right side wall, a left side wall a and a rear wall, which function respectively as continuations of the corresponding walls of the lower box portion 12 when the box portion 12 and lid portion 14 are in the closed position shown in Figure 1. The upper lid portion 14 of the hinge-lid container 10 further includes a top wall, which opposes the bottom wall of the lower box portion 12 when the upper lid portion 14 is in the closed position shown in Figure 1. The front walls of the box portion 12 and lid portion 14 of the hinge-lid container 10 are printed with manufacturer, product and promotional information represented schematically in Figure 1 by solid-coloured letters A, B and C.

A discontinuous tactile coating 16 is provided on the portions of the exterior of the hinge-lid container 10 printed with the manufacturer, product and promotional information. As shown in Figure 1, the discontinuous tactile coating 16 is formed by the application of a tinted varnish 18 to the printed portions of the outer surface of the front walls of the box portion 12 and lid portion 14 of the hinge-lid container 10 in a regular vertical striped pattern.

In an alternative embodiment (not shown), the hinge-lid container of Figure 1 is provided with a discontinuous tactile coating by applying the tinted varnish in a regular vertical striped pattern to the entire outer surface of the front walls of the box portion 12 and lid portion 14.

While the invention has been exemplified above with respect to a hinge-lid container having a discontinuous tactile coating on the outer surface of a single wall, it will be appreciated that containers of smoking articles according to the invention may have discontinuous coatings provided on the outer surface of two or more walls of the container. For example, in a further embodiment (not shown), the entire exterior of the hinge-lid container of Figure 1 is provided with a discontinuous tactile coating by applying a tinted varnish in a regular vertical striped pattern to the entire outer surface of the front, right side, left side, rear and bottom walls of the box portion 12 and the entire outer surface of the front, right side, left side, rear and top walls of the lid portion 14.

Furthermore, it will be appreciated that containers of smoking articles according to the invention may have a discontinuous coating that is formed by applying one or more tinted varnishes to the outer surface of the container in two or more different patterns each of which comprises a plurality of raised features. For example, in other embodiments (not shown), the hinge-lid container of Figure 1 is provided with a discontinuous tactile coating by applying a tinted varnish in: (i) an irregular whorl pattern to the entire outer surface of the front walls of the box 12 and lid 14 portions; and (ii) in a regular vertical striped pattern to the entire outer surface of the rear walls of the box 12 and lid 14 portions.

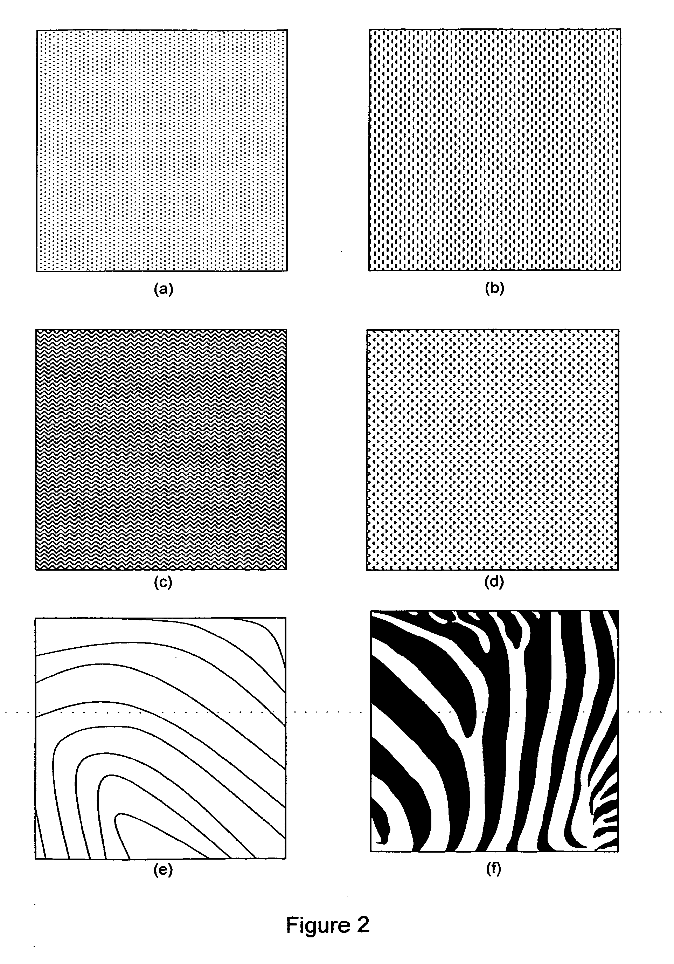

While the invention has been exemplified above with respect to a container of smoking articles having a discontinuous tactile coating formed by applying a tinted varnish to portions of the outer surface of the front walls of the box portion 12 and lid portion 14 in a regular striped pattern, it will be appreciated that containers of smoking articles according to the invention may have a discontinuous coating that is formed by applying one or more tinted varnishes to the outer surface of the container in other regular or irregular patterns. Examples of other regular patterns in which one or more tinted varnishes may be applied to the outer surface of containers of smoking articles according to the invention in order to form a discontinuous tactile coating are shown in Figures 2a to 2d. Examples of irregular patterns in which one or more tinted varnishes may be applied to the outer surface of containers of smoking articles according to the invention in order to form a discontinuous tactile coating are shown in Figures 2e and 2f.

## Claims

1. A container of smoking articles (10) having a discontinuous tactile coating (16), wherein the discontinuous tactile coating (16) is formed by applying one or more tinted varnishes (18) to the outer surface of the container (10) in a pattern comprising a plurality of raised features having a height of at least about 10 microns and a separation of at least about 20 microns.

2. A container of smoking articles (10) according to claim 1 wherein the the plurality of raised features are of substantially the same height.

3. A container of smoking articles (10) according to claim 1 or 2 wherein the discontinuous tactile coating (16) is provided on a portion of the outer surface of the container (10) printed with graphics, text or a combination thereof.

4. A container of smoking articles (10) according to any of claims 1 to 3 wherein the discontinuous tactile coating (16) is formed by applying one or more tinted varnishes to the outer surface of the container (10) which are curable by exposure to ultraviolet light.

5. A container of smoking articles (10) according to any of claims 1 to 4 wherein the discontinuous tactile coating (16) has a coefficient of static friction of between about 0.2 and about 1.0.

6. A container of smoking articles (10) according to any preceding claim formed from one or more folded laminar blanks.

7. A container of smoking articles (10) according to claim 6 wherein the one or more folded laminar board blanks have a weight of between about 60 grams per square metre and about 250 grams per square metre.

8. A method of making a container of smoking articles (10) having a discontinuous tactile coating (16), the method comprising:
applying one or more tinted varnishes to the outer surface of a laminar blank in a pattern comprising a plurality of raised features having a height of at least about 10 microns and a separation of at least about 20 microns;
curing the one or more tinted varnishes; and
folding the laminar blank around a bundle of smoking articles.

9. A method according to claim 8 comprising curing the one or more tinted varnishes by exposure to ultraviolet light.

10. A method according to claim 9 comprising curing the one or more tinted varnishes in an inert gas atmosphere.

## Patentansprüche

1. Behälter für Rauchartikel (10) mit einer diskontinuierlichen taktilen Beschichtung (16), wobei die diskontinuierliche taktile Beschichtung (16) durch Aufbringen von einem oder mehreren getönten Lacken (18) auf die Außenfläche des Behälters (10) in einem Muster gebildet wird, das mehrere erhabene Merkmale mit einer Höhe von wenigstens etwa 10 Mikron und einem Abstand von wenigstens etwa 20 Mikron umfasst.

2. Behälter für Rauchartikel (10) nach Anspruch 1, wobei die mehreren erhabenen Merkmale im Wesentlichen dieselbe Höhe haben.

3. Behälter für Rauchartikel (10) nach Anspruch 1 oder 2, wobei die diskontinuierliche taktile Beschichtung (16) auf einem Abschnitt der Außenfläche des Behälters (10) vorgesehen ist, die mit Graphik, Text oder einer Kombination davon bedruckt ist.

4. Behälter für Rauchartikel (10) nach einem der Ansprüche 1 bis 3, wobei die diskontinuierliche taktile Beschichtung (16) durch Aufbringen von einem oder mehreren getönten Lacken auf die Außenfläche des Behälters (10) gebildet ist, die durch Belichten mit ultraviolettem Licht härtbar sind.

5. Behälter für Rauchartikel (10) nach einem der Ansprüche 1 bis 4, wobei die diskontinuierliche taktile Beschichtung (16) einen statischen Reibungskoeffizienten zwischen etwa 0,2 und etwa 1,0 hat.

6. Behälter für Rauchartikel (10) nach einem der vorherigen Ansprüche, der auf einem oder mehreren gefalteten laminaren Rohlingen ausgebildet ist.

7. Behälter für Rauchartikel (10) nach Anspruch 6, wobei die ein oder mehreren gefalteten laminaren Papprohlinge ein Gewicht zwischen etwa 60 Gramm pro Quadratmeter und etwa 250 Gramm pro Quadratmeter haben.

8. Verfahren zur Herstellung eines Behälters für Rauchartikel (10) mit einer diskontinuierlichen taktilen Beschichtung (16), wobei das Verfahren Folgendes beinhaltet:
Aufbringen von einem oder mehreren getönten Lacken auf die Außenfläche eines laminaren Rohlings in einem Muster, das mehrere erhabene Merkmale mit einer Höhe von wenigstens etwa 10 Mikron und einem Abstand von wenigstens etwa 20 Mikron umfasst;
Härten der ein oder mehreren getönten Lacke; und
Falten des laminaren Rohlings um ein Bündel Rauchartikel.

9. Verfahren nach Anspruch 8, das das Härten der ein oder mehreren getönten Lacke durch Belichten mit ultraviolettem Licht beinhaltet.

10. Verfahren nach Anspruch 9, das das Härten der ein oder mehreren getönten Lacke in einer Inertgasatmosphäre beinhaltet.

## Revendications

1. Contenant d'articles à fumer (10) ayant un revêtement tactile discontinu (16), dans lequel le revêtement tactile discontinu (16) est formé en appliquant un ou plusieurs vernis teintés (18) sur la surface externe du contenant (10) selon un motif comprenant une pluralité d'aspects surélevés d'une hauteur d'au moins environ 10 microns et une séparation d'au moins environ 20 microns.

2. Contenant d'articles à fumer (10) selon la revendication 1, dans lequel les aspects surélevés de la pluralité d'aspects surélevés sont sensiblement de la même hauteur.

3. Contenant d'articles à fumer (10) selon la revendication 1 ou 2, dans lequel le revêtement tactile discontinu (16) est fourni sur une partie de la surface externe du contenant (10) imprimée avec des graphiques, un texte ou une combinaison des deux.

4. Contenant d'articles à fumer (10) selon l'une quelconque des revendications 1 à 3, dans lequel le revêtement tactile discontinu (16) est formé en appliquant un ou plusieurs vernis teintés sur la surface externe du contenant (10) qui sont durcissables par exposition à une lumière ultraviolette.

5. Contenant d'articles à fumer (10) selon l'une quelconque des revendications 1 à 4, dans lequel le revêtement tactile discontinu (16) a un coefficient de friction statique d'environ 0,2 à environ 1,0.

6. Contenant d'articles à fumer (10) selon l'une quelconque des revendications précédentes, formé à partir d'un ou de plusieurs flans stratifiés pliés.

7. Contenant d'articles à fumer (10) selon la revendication 6, dans lequel les un ou plusieurs flans de carton stratifiés pliés ont un poids entre environ 60 grammes par mètre carré et environ 250 grammes par mètre carré.

8. Procédé de fabrication d'un contenant d'articles à fumer (10) ayant un revêtement tactile discontinu (16), le procédé comprenant :
l'application d'un ou plusieurs vernis teintés sur la surface externe d'un flan stratifié selon un motif comprenant une pluralité d'aspects surélevés d'une hauteur d'au moins environ 10 microns et une séparation d'au moins environ 20 microns ;
le durcissement des un ou plusieurs vernis teintés ; et
le pliage du flan stratifié autour d'une botte d'articles à fumer.

9. Procédé selon la revendication 8, comprenant le durcissement des un ou plusieurs vernis teintés par exposition à une lumière ultraviolette.

10. Procédé selon la revendication 9, comprenant le durcissement des un ou plusieurs vernis teintés dans une atmosphère de gaz inerte.
